# EUROPÄISCHE PATENTSCHRIFT

(11) **EP 3 022 459 B1**
(45) Veröffentlichungstag und Bekanntmachung des Hinweises auf die Patenterteilung: **05.02.2020**
(21) Anmeldenummer: 14736332.9
(22) Anmeldetag: 26.06.2014
(51) Int. Cl.: F16F 9/00, F16F 9/30

(54) **VORRICHTUNG ZUM ABBREMSEN EINER BEWEGUNG**
DEVICE TO SLOW DOWN A MOTION
APPAREIL POUR RALENTIR UN MOUVEMENT

(30) Priorität: 18.07.2013 DE 202013006474 U
(43) Veröffentlichungstag der Anmeldung: 25.05.2016
(73) Patentinhaber: Grass GmbH, 6973 Höchst (AT)
(72) Erfinder: KRUEDENER, Boris, 64285 Darmstadt (DE)
(74) Vertreter: Otten, Roth, Dobler & Partner mbB Patentanwälte
(86) Internationale Anmeldenummer: PCT/EP2014/063510
(87) Internationale Veröffentlichungsnummer: WO 2015/007492

(56) Entgegenhaltungen:
- EP-A1- 1 852 870
- WO-A1-2006/042432
- WO-A1-2010/022424
- DE-A1- 10 341 969
- DE-A1-102007 047 287
- DE-A1-102011 052 329
- DE-U1- 7 623 573
- DE-U1-202010 014 992
- US-A- 5 042 765

## Beschreibung

Die Erfindung betrifft eine Vorrichtung zum Abbremsen einer Bewegung nach dem Oberbegriff des Anspruchs 1, eine Führungsvorrichtung sowie ein Möbel.

Möbel weisen häufig Möbelteile auf, die z.B. bezüglich eines Möbelkorpus oder z.B. zueinander beweglich gelagert sind. Vor allem um Schäden und laute Geräusche zu vermeiden, sind auf dem Gebiet des Möbelbaues Vorrichtungen zum Abbremsen einer Bewegung eines bewegbaren Möbelteils, wie zum Beispiel einer Schublade, in verschiedensten Ausführungen bekannt. Durch deren Bremswirkung können Geschwindigkeiten eines bewegbaren Möbelteils verringert und gegebenenfalls sogar begrenzt werden. Damit lassen sich harte Stöße z.B. beim Zusammentreffen mit einem mechanischen Anschlag vermeiden, die zu Verschleißspuren und unter Umständen eine Funktion beeinträchtigende Beschädigungen führen können.

Allerdings sind bekannte Vorrichtungen zum Abbremsen einer Bewegung eines Möbelteils häufig nur für einen vorgegebenen Bereich von Geschwindigkeiten und von Betätigungskräften ausgelegt, um bei Nutzung eines Möbels im vorgegebenen Bereich frühzeitige Schäden durch Abnutzung zu vermeiden. Schäden durch Geschwindigkeiten und Kräfte außerhalb des vorgegebenen Bereichs werden dagegen als schwer vermeidbar hingenommen. Bekannte Bremsvorrichtungen können des Weiteren z.B. Sensormittel aufweisen, mit denen sich ein Bremsverhalten der Vorrichtung auf eine auftretende Geschwindigkeit bzw. einen entsprechenden Impuls abstimmen lässt.

Die EP 1 852 870 A1 betrifft einen viskosen Flüssigkeitsdämpfer, die DE 10 2011 052 329 A1 ein Selbsteinzugssystem für ein bewegliches Möbelteil und die WO 2010/022424 A1 einen Dämpfer für relativ zueinander bewegbare Möbelteile. Die DE19760023573 U1 betrifft einen Abdichtkörper mit einem elastisch verformbaren Behältnis, in das das viskose Fluid dicht eingeschlossen ist.

Aus der WO 2006/042432 A1 ist eine Abstützvorrichtung für Gegenstände wie Möbel bekannt, wobei eine Kapsel aus einem elastischen Werkstoff vorgesehen ist, die eine viskoelastische Masse enthält. Die US 5 042 765 A thematisiert eine Distanzscheibenvorrichtungen mit einer elastischen Hülle mit viskosem Kittmaterial.

Der vorliegenden Erfindung liegt die Aufgabe zugrunde, eine Vorrichtung zum Abbremsen einer Bewegung eines relativ zu einem Korpus bewegbaren Möbelteils bereitzustellen, die bei vergleichsweise kompaktem Aufbau eine verbesserte Dämpfungswirkung aufweist.

Die Aufgabe wird durch eine Vorrichtung mit den Merkmalen des Anspruchs 1 gelöst.

Bevorzugte und vorteilhafte Ausführungen der Erfindung sind in den Unteransprüchen angegeben.

Die Erfindung geht von einer Vorrichtung zum Abbremsen einer Bewegung eines relativ zu einem Korpus bewegbaren Möbelteils durch Dämpfung aus, die wenigstens zwei Dämpferteile umfasst. Dabei ist ein erstes Dämpferteil relativ zu einem zweiten Dämpferteil bewegbar. Des Weiteren ist an einem der beiden Dämpferteile ein Dämpfungselement mit einem Verformungselement angebracht, wobei im Verformungselement ein anomal viskoses Fluid enthalten ist und wobei das anomal viskose Fluid dilatant viskos ist. Bei einer dilatanten Viskosität steigt die Bremskraft des Fluids überproportional zur Geschwindigkeit eines darin bewegten Körpers an. Das dilatant viskose Fluid ist insbesondere zur Vermeidung von Geschwindigkeiten des ersten Geschwindigkeitsbereichs vorteilhaft geeignet.

Mit einem normal viskosen Fluid ist an einem Körper, der mit dem Fluid in Berührung steht, eine Bremskraft erzeugbar, die mit einer Geschwindigkeit eines darin bewegten Körpers linear, d.h. proportional ansteigt. Demgegenüber lässt sich mit einem anomal viskosen Fluid eine Bremskraft erzeugen, die mit der Geschwindigkeit eines darin bewegten Körpers - zumindest in einem vorgegebenen Geschwindigkeitsbereich - nichtlinear, z.B. exponentiell oder z.B. logarithmisch, zusammenhängt.

Das anomal viskose Fluid kann eine Flüssigkeit sein, wie z.B. ein Öl, dessen anomale Viskosität durch einen Anteil großer Moleküle, z.B. makromolekulare Kohlenwasserstoffverbindungen, hervorgerufen wird. Das anomal viskose Fluid kann des Weiteren eine Flüssigkeit mit einer Beimischung sein. Die Beimischung kann z.B. ein Pulver oder Granulat eines festen Stoffes sein.

Durch Einsatz eines anomal viskosen Fluids bietet die erfindungsgemäße Vorrichtung den Vorteil, dass sich für verschiedene Geschwindigkeitsbereiche Bremswirkungen bereitstellen lassen, die sich vergleichsweise stark unterscheiden. Dabei kann die Bremswirkung in verschiedenen Geschwindigkeitsbereichen derart unterschiedlich sein, dass ein vorgegebener erster Geschwindigkeitsbereich kaum oder gar nicht erreichbar ist. Vorzugsweise ist die Vorrichtung anhand der anomalen Viskosität des Fluids derart abgestimmt, dass ein Möbelteil bei Überschreiten eines vorgegebenen zweiten Geschwindigkeitsbereichs einen überproportionalen Anstieg der Bremskraft erfährt. Dabei lassen sich vorteilhaft Stöße verringern oder gänzlich verhindern, wodurch Schäden an z.B. Staugut eines beweglichen Möbelteils, insbesondere einer z.B. Möbeltür, einer z.B. Klappe bzw. einer z.B. Schublade vermeidbar sind.

Das anomal viskose Fluid ist dabei derart zwischen dem ersten und dem zweiten Dämpferteil angeordnet, dass Kräfte zwischen den beiden Dämpferteilen - zumindest teilweise - über das anomal viskose Fluid übertragbar sind. Das anomal viskose Fluid ist dazu vorgesehen, dass zumindest ein Teil einer bremsenden Kraft zur Dämpfung dadurch erreichbar ist, dass das anomal viskose Fluid verformt und/oder in Bewegung versetzt wird. Für eine vergleichsweise einfache Ausführung der Erfindung kann das Verformungselement beispielsweise ein offenes, insbesondere starres Behältnis sein, in der das anomale viskose Fluid aufgefangen ist. Ein an einem der Dämpferteile ausgebildetes Tauchelement, z.B. in Form eines Stifts, kann bewegbar in das Verformungselement derart hineinreicht, dass beispielsweise der Stift in das anomal viskose Fluid eingetaucht ist und beim Bewegen durch das Fluid aufgrund der Verdrängung einem Widerstand des Fluids ausgesetzt ist. Durch eine Länge des Verformungselements kann z.B. eine Strecke vorgegeben sein, über die die Vorrichtung eine Bremswirkung bereitstellen kann.

Vorzugsweise ist das Fluid derart beschaffen, dass dem Tauchelement - z.B. einem Stift - bei Bewegungen im vorgegebenen zweiten Geschwindigkeitsbereich relativ geringe Bremskräfte entgegengesetzt sind. Der zweite Geschwindigkeitsbereich ist vorzugsweise auf Geschwindigkeiten beschränkt, die auf eine vergleichsweise bequeme und zügige Bedienung des Möbelteils angepasst ist. Oberhalb des zweiten Geschwindigkeitsbereichs kann der erste Geschwindigkeitsbereich vorgegeben sein. In diesem lassen sich unerwünschte hohe Geschwindigkeiten stärker abbremsen, als zum Beispiel Geschwindigkeiten des zweiten Geschwindigkeitsbereichs, die bei der Auslegung zum Bespiel einer beweglichen Lagerung eines Möbelteils als gebrauchsüblich angenommen wurden. Weil das unterschiedliche Dämpfungsverhalten beziehungsweise Bremsverhalten auf den charakteristischen Materialeigenschaften des anomal viskosen Fluids, dass als Dämpfungsmedium eingesetzt ist, beruht, kann beispielsweise auf ein mechanisches oder elektronisches Kontrollgerät zur Anpassung einer Bremskraft verzichtet werden. Somit lässt sich eine vergleichsweise einfache und insbesondere kompakt aufgebaute Dämpfungsvorrichtung bereitstellen.

Erfindungsgemäß umfasst das Verformungselement ein Behältnis, in das das anomal viskose Fluid dicht eingeschlossen ist. Dies bietet den Vorteil, dass das Fluid der Vorrichtung nicht entweichen kann. Zudem lässt sich damit vorteilhaft gewährleisten, dass sich die Zusammensetzung des anomal viskosen Fluids nicht z.B. durch Verdunstung oder chemische Reaktion verändern kann.

Außerdem ist das Behältnis elastisch verformbar. Beispielsweise kann das Behältnis zwei ineinander steckbare topfförmige Hülsen und eine Feder umfassen, wobei beispielsweise die Feder in einem entspannten Zustand die beiden Hülsen in einer zusammengesteckten und zusammenschiebbaren Stellung verbindet. Die topfförmigen Hülsen können mit dem Fluid angefüllt sein, um z.B. einem schnellen Zusammenschieben der Hülsen einen größeren Widerstand entgegen zu setzen als einem vergleichsweise langsamen. Durch die elastische Verformbarkeit des Behältnisses können Rückstellkräfte bereitgestellt werden, die das Fluid insbesondere nach einem Zusammenwirken der beiden Dämpferteile in eine vorgegebene Anordnung zurückkehren lassen.

Gemäß einer weiteren Ausbildung der Erfindung kann am Verformungselement eine Öffnung ausgebildet sein, die zur Durchführung eines der beiden Dämpferteile ausgebildet ist. Das Verformungselement ist vorzugsweise in einer Weise ausgebildet, dass in einer Relativposition des ersten und des zweiten Dämpferteils zueinander zumindest zeitweise eine Dichtwirkung entstehen kann. Dabei kann eine Bremswirkung auf zweierlei Weise entstehen: einerseits kann eines der Dämpferteile durch Reibung am Verformungselement abbremsbar sein. Andererseits kann eines der Dämpferteile zum Beispiel ein Gas oder eine andere Flüssigkeit, die sich im anderen der Dämpferteile zeitweise befinden kann, verdrängen. Dabei kann die Flüssigkeit beziehungsweise das Gas zwischen dem Verformungselement und einem der Dämpfungsteile entweichen. Ein Druckabfall zwischen den Dämpferteilen kann dabei von einer Nachgiebigkeit des Verformungselements und insbesondere des darin enthaltenen anomal viskosen Fluids abhängig sein, wodurch ein Zwischenraum zwischen einem der Dämpferteile und dem Verformungselement beeinflusst ist. Wenn der Stößel vergleichsweise schnell in den Hohlkörper eingeführt wird entsteht vergleichsweise ein schneller Druckanstieg, der zu einer Versteifung des Verformungselements und insbesondere des darin enthaltenen anomal viskosen Fluids führen kann. Durch die Versteifung des Verformungselements und des anomal viskosen Fluids kann sich das dichtende Verformungselement nicht für eine schnellere Druckabsenkung aufweiten wodurch der zunehmende Druck im Wesentlichen allein durch die Bewegung des Stößels entgegenwirkt. Dies bietet beispielsweise die Möglichkeit zu verhindern, dass der Stößel an einer abschließenden Wandung anschlägt.

In einem ähnlichen Sinn kann das Dämpfungselement eine Ventileinrichtung umfassen, wobei beispielsweise das Verformungselement ein Ventilkörper des Ventilelements bildet.

Hierbei kann das elastische Verformungselement als Schließkörper der Ventileinrichtung ausgebildet sein, an dem sich ein zweites Fluid, das mit einem der Dämpferteile aus dem anderen Dämpferteil verdrängbar ist, am Verformungselement vorbeileiten lässt. Das Verformungselement kann dabei relativ einfach z.B. als elastische Kugel geformt sein. Insbesondere durch das im Verformungselement eingeschlossene anomal viskose Fluid kann sich der Schließkörper je nach Druckanstieg im zweiten Fluid unterschiedlich schnell an eine Form eines Ventilsitzes der Ventileinrichtung anpassen. Dadurch lassen sich in einer relativ kompakten Bauweise vorteilhaft qualitativ unterschiedliche Dämpfungsverhalten zum Abbremsen eines bewegbaren Möbelteils bereitstellen.

Eine weitere Ausführung der Erfindung besteht darin, dass das Dämpferteil, das gegenüber dem Dämpfungselement verschiebbar angeordnet ist, mehrere Abschnitte mit unterschiedlichem Querschnitt, insbesondere mit unterschiedlichen Querschnittsflächen aufweist. Insbesondere ist es bevorzugt, dass sich der Querschnitt zweier Längsabschnitte des Dämpferteils in einem Übergangsabschnitt ändert, der entlang einer Längsachse des Dämpferteils kürzer als jeder der Längsabschnitte ist. Auf diese Weise lässt sich das nicht lineare Verdrängungsverhalten des anomal viskosen Fluids über verschiedene Abschnitte mehrmals nutzen, um eine starke Geschwindigkeitsabsenkung zu erreichen. Hierfür wird das Verformungselement vorzugsweise als Flächenreibungskörper ausgebildet.

Für einen vergleichsweise einfachen und zuverlässigen Aufbau kann das erste Dämpferteil als Hohlkörper, insbesondere als Hohlzylinder ausgebildet sein. Dabei kann das erste Dämpferteil z.B. einseitig geschlossen sein. Vorzugsweise ist dabei das zweite Dämpferteil als Stößel ausgebildet, der zum Einführen in das erste Dämpferteil angepasst ist.

Die Vorrichtung ist außerdem in der Weise ausführbar, dass das Verformungselement als Prallkörper für das dazu bewegliche Dämpferteil ausgebildet ist, wobei am Dämpferteil ein Stoßabschnitt am Verformungselement angepasst sein kann. Mit einer Vorrichtung zum Abbremsen einer Bewegung, insbesondere gemäß einer oder mehrerer vorgenannten Ausführungen kann eine Führungsvorrichtung mit der ein bewegbares Möbelteil an einem Möbelkorpus eines Möbels führbar ist, vorteilhaft kompakt gebaut werden.

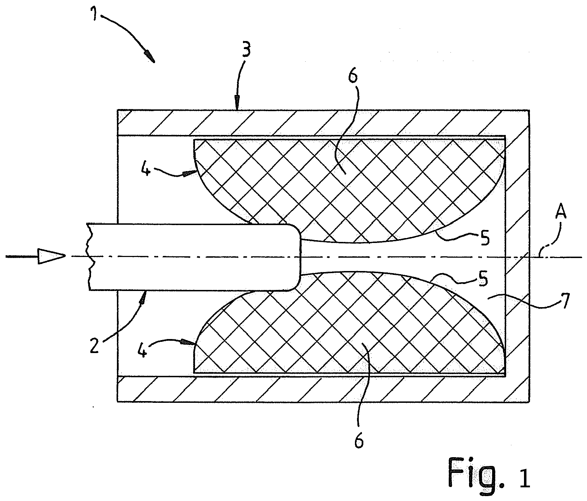

Zudem ist eine Vorrichtung zum Abbremsen gemäß der Erfindung vorteilhaft in einem Möbel einsetzbar, wodurch die Möbel vergleichsweise mehr Platz zur Verfügung gestellt werden kann. Ein Ausführungsbeispiel der Erfindung wird nachfolgend anhand der einzigen Figur beschrieben. Wobei weitere Vorteile der Erfindung aufgeführt werden.

In der Figur ist eine erfindungsgemäße Vorrichtung 1 in einer seitlicher Ansicht im vertikalen Schnitt entlang einer zentralen Längsachse A gezeigt. Die Vorrichtung weist ein erstes Dämpferelement in der Form eines Stößels 2 auf, der in ein zweites Dämpfungsteil 3, das die Form eines einseitig geschlossenen Hohlzylinders aufweist, einführbar ist.

Innerhalb des Dämpferteils 3 ist ein Dämpfungselement 4 in Form eines ring- beziehungsweise schlauchförmigen Kissens angebracht. Das Dämpfungselement 4 weist ein Verformungselement 5 in Form einer elastischen Hülle auf, die zum Beispiel aus Gummi oder Silikongummi bestehen kann. Das Verformungselement 5 schließt einen Hohlraum dicht ab, der mit einem anomal viskosen Fluid zum Beispiel einer Mischung aus Tonpulver und Wasser bestehen kann. Dabei kann das Verformungselement mit dem Fluid derart gefüllt sein, dass das Verformungselement einen inneren Bereich 7 des Dämpferteils 3 verschließt oder nur einen Durchlass mit einem vergleichsweise kleinen Querschnitt offen lässt.

Das erste Dämpferelement, der Stößel 2, ist derart angeordnet, dass sich seine Längsachse parallel auf der zentralen Achse entlang bewegt, sodass das freistehende Ende des Stößels sich zwischen die Abschnitte der elastischen Hülle des Verformungselements 5 schieben kann, die an der zentralen Achse einander am nächsten angeordnet sind oder dort unmittelbar aneinander anliegen. Wenn sich der Stößel 2 zwischen die Hüllenbereiche an der Achse A schiebt, wird das anomal viskose Fluid 6 verdrängt und dadurch in Bewegung gesetzt. Bei einer langsamen Bewegung des Dämpferteils 2 bleibt auch die Verdrängungsbewegung des Fluids 6 langsam, so dass nur eine wenig oder gar nicht feststellbare, insbesondere spürbare Versteifung stattfindet.

Bei einem schnellen Eindringen des Dämpferteils 2 in das Dämpferteil 3 kann jedoch eine derart schnelle Verformung des Dämpfungselements 4 stattfinden, dass zumindest ein Teil des im Verformungselement 5 eingeschlossene Fluids vergleichsweise rasch auf hohe Geschwindigkeiten beschleunigt wird, so dass die Viskosität des Fluids 6 überproportional stark ansteigt. Die höhere Viskosität ist mit einer geringeren Beweglichkeit des Fluids 6 verbunden und ist mit einer erhöhten Steifigkeit des Dämpfungselements 4 gleichbedeutend. Aufgrund der erhöhten Steifigkeit setzt das Dämpfungselement 4 der eindringenden Bewegung des Stößels 2 einen überproportionalen erhöhten Widerstand entgegen und bremst diesen umso stärker ab.

### Bezugszeichenliste:

- 1: Vorrichtung
- 2: Dämpferteil
- 3: Dämpferteil
- 4: Dämpfungselement
- 5: Verformungselement
- 6: Fluid
- 7: Raumbereich

## Patentansprüche

1. Vorrichtung (1) zum Abbremsen einer Bewegung eines relativ zu einem Korpus bewegbaren Möbelteils durch Dämpfung, umfassend wenigstens zwei Dämpferteile (2, 3), wobei ein erstes Dämpferteil (2) relativ zu einem zweiten Dämpferteil (3) bewegbar ist, und dass an einem der beiden Dämpferteile (2, 3) ein Dämpfungselement (4) mit einem Verformungselement (5) angebracht ist, wobei im Verformungselement (5) ein dilatant viskoses Fluid (6) enthalten ist, wobei das Verformungselement (5) ein elastisch verformbares Behältnis umfasst, in welches das viskose Fluid (6) dicht eingeschlossen ist, **dadurch gekennzeichnet, dass** am Verformungselement (5) eine Öffnung ausgebildet ist, die zur Durchführung eines der beiden Dämpferteile (2,3) ausgebildet ist.

2. Vorrichtung (1) nach Anspruch 1, **dadurch gekennzeichnet, dass** das Verformungselement (5) in einer Weise ausgebildet ist, dass in einer Relativposition des ersten und des zweiten Dämpferteils (2, 3) zueinander zumindest zeitweise eine Dichtwirkung entstehen kann.

3. Vorrichtung (1) nach einem der vorgenannten Ansprüche, **dadurch gekennzeichnet, dass** das Dämpfungselement (4) eine Ventileinrichtung umfasst.

4. Vorrichtung (1) nach Anspruch 3, **dadurch gekennzeichnet, dass** das elastische Verformungselement (5) als Schließkörper der Ventileinrichtung ausgebildet ist, an dem sich ein zweites Fluid, das mit einem der Dämpferteile (2, 3) aus dem anderen der Dämpferteile (2, 3) verdrängbar ist, am Verformungselement (5) vorbeileiten lässt.

5. Vorrichtung (1) nach einem der vorgenannten Ansprüche, **dadurch gekennzeichnet, dass** eines der Dämpferteile (2, 3), das gegenüber dem Dämpfungselement (4) verschiebbar angeordnet ist, mehrere Abschnitte mit unterschiedlichem Querschnitt, insbesondere mit unterschiedlichen Querschnittsflächen aufweist.

6. Vorrichtung (1) nach Anspruch 5, **dadurch gekennzeichnet, dass** sich der Querschnitt zweier Längsabschnitte des einen der Dämpfungsteile (2, 3) in einem Übergangsabschnitt ändert, der entlang einer Längsachse des Dämpfungsteils (2, 3) kürzer als jeder der Längsabschnitte ist.

7. Vorrichtung (1) nach einem der vorgenannten Ansprüche, **dadurch gekennzeichnet, dass** das Verformungselement (5) als Flächenreibungskörper ausgebildet ist.

8. Vorrichtung (1) nach einem der vorgenannten Ansprüche, **dadurch gekennzeichnet, dass** das Verformungselement (5) als Prallkörper für eines der Dämpferteile (2, 3), das vom Verformungselement (5) lösbar angeordnet ist, ausgebildet ist, wobei am Dämpferteil (2, 3) ein Stoßabschnitt an das Verformungselement (5) angepasst ist.

9. Vorrichtung (1) nach einem der vorgenannten Ansprüche, **dadurch gekennzeichnet, dass** das erste Dämpferteil (3) als Hohlkörper, insbesondere als Hohlzylinder ausgebildet ist.

10. Vorrichtung (1) nach einem der vorgenannten Ansprüche, **dadurch gekennzeichnet, dass** das zweite Dämpferteil (2) als Stößel ausgebildet ist, der zum Einführen in das erste Dämpferteil (3) angepasst ist.

11. Führungsvorrichtung, mit dem ein bewegbares Möbelteil an einem Korpus eines Möbels führbar ist, mit einer Vorrichtung nach einem der Ansprüche 1 bis 10.

12. Möbel mit einer Vorrichtung nach einem der Ansprüche 1 bis 10.

## Claims

1. Device (1) for braking, as a result of damping, a movement of a furniture part which is movable relative to a furniture carcass, comprising at least two damper parts (2, 3), wherein a first damper part (2) is movable relative to a second damper part (3), and wherein a damping element (4) with a deforming element (5) is mounted on one of the two damper parts (2, 3), wherein a dilatant viscous fluid (6) is contained in the deforming element (5), wherein the deforming element (5) comprises an elastically deformable container, in which the viscous fluid (6) is enclosed in a sealed manner, **characterised in that** an opening is formed on the deforming element (5) which is designed for guiding through one of the two damper parts (2, 3).

2. Device (1) according to claim 1, **characterised in that** the deforming element (5) is designed such that in a relative position of the first and the second damper part (2, 3) with respect to one another a sealing effect can be formed at least at times.

3. Device (1) according to any of the preceding claims, **characterised in that** the damping element (4) comprises a valve device.

4. Device (1) according to claim 3, **characterised in that** the elastic deforming element (5) is designed as a closing body of the valve device, past which a second fluid, which is displaceable by one of the damper parts (2, 3) out of the other damper part (2, 3), can be guided on the deforming element (5).

5. Device (1) according to any of the preceding claims, **characterised in that** one of the damper parts (2, 3), which is arranged to be displaceable relative to the damping element (4), has a plurality of sections with different cross-sections, in particular with different cross-sectional areas.

6. Device (1) according to claim 5, **characterised in that** the cross-section of two longitudinal sections of one of the damper parts (2, 3) changes in an transitional section, which is shorter along a longitudinal axis of the damper part (2, 3) than each of the longitudinal sections.

7. Device (1) according to any of the preceding claims, **characterised in that** the deforming element (5) is designed as a surface friction body.

8. Device (1) according to any of the preceding claims, **characterised in that** the deforming element (5) is designed as an impact body for one of the damper parts (2, 3) which is arranged to be detachable from the deforming element (5), wherein on the damper part (2, 3) an impact section is adapted to the deforming element (5).

9. Device (1) according to any of the preceding claims, **characterised in that** the first damper part (3) is designed as a hollow body, in particular as a hollow cylinder.

10. Device (1) according to any of the preceding claims, **characterised in that** the second damper part (2) is designed as a ram which is adapted to be inserted into the first damper part (3).

11. Guiding device, by means of which a movable furniture part can be guided on a carcass of an item of furniture, with a device according to any of claims 1 to 10.

12. Item of furniture with a device according to any of claims 1 to 10.

## Revendications

1. Dispositif (1) pour freiner par amortissement un mouvement d'une partie de meuble mobile par rapport à un corps, comprenant au moins deux parties d'amortissement (2, 3), une première partie d'amortissement (2) étant mobile par rapport à une deuxième partie d'amortissement (3), et en ce qu'un élément amortisseur (4) avec un élément de déformation (5) est fixé sur l'une des deux parties d'amortissement (2, 3), un fluide visqueux dilatant (6) étant contenu dans l'élément de déformation (5), l'élément de déformation (5) comprenant un récipient élastiquement déformable dans lequel le fluide visqueux (6) est enfermé hermétiquement, **caractérisé en ce qu'**une ouverture est réalisée sur l'élément de déformation (5), laquelle ouverture est conçue pour y faire passer l'une des deux parties d'amortissement (2, 3).

2. Dispositif (1) selon la revendication 1, **caractérisé en ce que** l'élément de déformation (5) est conçu de telle sorte que, dans une position relative de la première et de la deuxième partie d'amortissement (2, 3) l'une par rapport à l'autre, il se produit au moins temporairement un effet d'étanchéité.

3. Dispositif (1) selon l'une des revendications précédentes, **caractérisé en ce que** l'élément amortisseur (4) comprend un moyen de valve.

4. Dispositif (1) selon la revendication 3, **caractérisé en ce que** l'élément de déformation élastique (5) est conçu sous la forme d'un corps de fermeture du dispositif de valve, par lequel un deuxième fluide, qui peut être déplacé avec l'une des parties d'amortissement (2, 3) hors de l'autre des parties d'amortissement (2, 3), peut être guidé en contournant l'élément de déformation (5).

5. Dispositif (1) selon l'une des revendications précédentes, **caractérisé en ce que** l'une des parties d'amortissement (2, 3), qui est disposée de manière déplaçable par rapport à l'élément amortisseur (4), présente plusieurs parties de section transversale différente, en particulier avec des surfaces de section transversale différentes.

6. Dispositif (1) selon la revendication 5, **caractérisé en ce que** la section transversale de deux parties longitudinales de l'une des parties d'amortissement (2, 3) se modifie dans une partie de transition qui est plus courte, considéré le long d'un axe longitudinal de la partie amortissante (2, 3), que chacune des parties longitudinales.

7. Dispositif (1) selon l'une des revendications précédentes, **caractérisé en ce que** l'élément de déformation (5) est réalisé sous la forme d'un corps de friction de surface.

8. Dispositif (1) selon l'une des revendications précitées, **caractérisé en ce que** l'élément de déformation (5) est conçu sous la forme d'un corps d'impact pour l'une des parties d'amortissement (2, 3) qui est disposée de manière détachable de l'élément de déformation (5), une section d'impact sur la partie d'amortissement (2, 3) étant adaptée à l'élément de déformation (5).

9. Dispositif (1) selon l'une des revendications précitées, **caractérisé en ce que** la première partie d'amortissement (3) est conçue sous la forme d'un corps creux, en particulier sous la forme d'un cylindre creux.

10. Dispositif (1) selon l'une des revendications précédentes, **caractérisé en ce que** la deuxième partie d'amortissement (2) est conçue sous la forme d'un piston apte à être introduit dans la première partie d'amortissement (3).

11. Dispositif de guidage, avec lequel une partie de meuble mobile peut être guidée sur un corps d'un meuble, avec un dispositif selon l'une des revendications 1 à 10.

12. Meuble avec un dispositif selon l'une des revendications 1 à 10.
